Europäisches Patentamt

(19) European Patent Office

Office européen des brevets

(11) Numéro de publication: **0 165 841**
**B1**

(12) **FASCICULE DE BREVET EUROPEEN**

(45) Date de publication du fascicule du brevet: **01.08.90**

(51) Int. Cl.⁵: **G 02 B 6/38**

(21) Numéro de dépôt: **85400965.1**

(22) Date de dépôt: **15.05.85**

(54) **Procédé de connexion de fibres optiques et dispositifs de connexion obtenus selon ce procédé.**

(30) Priorité: **23.05.84 FR 8408059**

(43) Date de publication de la demande:
**27.12.85 Bulletin 85/52**

(45) Mention de la délivrance du brevet:
**01.08.90 Bulletin 90/31**

(84) Etats contractants désignés:
**DE GB IT SE**

(56) Documents cités:
**EP-A-0 081 349**
**FR-A-2 533 709**
**US-A-4 179 185**

**PATENTS ABSTRACTS OF JAPAN, vol. 8, no. 105 (P-274)(35), 17 Mai 1984 & JP - A - 59 15209**
**PATENTS ABSTRACTS OF JAPAN, vol. 4, no. 184 (P-41)(90), 18 Décembre 1980 & JP - A - 55 127 502**
**PATENTS ABSTRACTS OF JAPAN, vol. 5, no. 1 (P-43)(140), 8 Janvier 1981; & JP - A - 55 134 803 (NIPPON DENSHIN DENWA KOSHA) 21.10.1980**
**IBM TECHNICAL DISCLOSURE BULLETIN, vol. 23, no. 4, Septembre 1980, page 1686, New York, US;J.D. CROW et al.:"Nonsymmetric optical star coupler"**
(73) Titulaire: **COMMISSARIAT A L'ENERGIE ATOMIQUE**
**31/33, rue de la Fédération**
**F-75015 Paris (FR)**

(72) Inventeur: **Calvet, Jean**
**15, rue Dussoubs**
**F-75002 Paris (FR)**
Inventeur: **Cavan, Jean-Claude**
**31, rue Leroyer**
**F-94300 Vincennes (FR)**
Inventeur: **Thevenin, Jean-Claude**
**54, rue de Villacoublay**
**F-78140 Velizy (FR)**

(74) Mandataire: **Mongrédien, André et al**
**c/o BREVATOME 25, rue de Ponthieu**
**F-75008 Paris (FR)**

Courier Press, Leamington Spa, England.

## Description

La présente invention a pour objet un procédé de connexion de fibres optiques ainsi que des dispositifs de connexion obtenus selon ce procédé.

Elle s'applique en particulier à la connexion de fibres optiques en matière plastique pouvant être utilisées pour la transmission de signaux optiques notamment dans le domaine de la médecine, des télécommunications, de l'automobile, de l'avionique, de la visualisation, de la décoration, de la physique des particules, etc.

Dans la transmission de signaux optiques par fibres optiques, la connexion de ces fibres optiques est l'un des points critiques et des moins aisés à réaliser.

La qualité des connecteurs de fibres optiques dépend de plusieurs facteurs et notamment des pertes de lumière, de la reproductibilité de ces pertes lors de connexions successives, de la simplicité de montage de ces connecteurs et de leur coût.

Les fibres optiques en matière plastique présentent l'avantage d'être d'un faible coût et d'un emploi facile. En revanche, étant donné qu'elles présentent des atténuations importantes, ces fibres sont principalement destinées à être utilisées sur de courtes distances (inférieures à quelques dizaines de mètres), ce qui implique de nombreuses connexions successives et donc l'utilisation de nombreux connecteurs.

Dans l'état actuel de la technique, les fibres optiques sont fixées à leurs extrémités à des manchons de centrage servant à les monter dans ces connecteurs.

L'une des méthodes actuellement utilisées pour connecter des fibres optiques plastiques consiste à dénuder les fibres optiques de leur gaine de protection, dite gaine mécanique par opposition à la gaine optique, à l'une de leurs extrémités et à les coller respectivement dans un manchon ou embout de centrage. La colle permet de lier directement l'embout de centrage à la gaine optique de la fibre correspondante.

Ce procédé de connexion par collage induit des problèmes particuliers et notamment de compatibilité de matériaux entre la gaine optique des fibres et la colle utilisée. En effet, cette colle doit être chimiquement inerte vis-à-vis de la gaine optique sous peine d'affecter la qualité optique des fibres. Par ailleurs, cette colle doit présenter une bonne adhérence avec la gaine optique des fibres mais aussi avec l'embout de centrage généralement métallique. D'autres problèmes peuvent être induits par l'emploi de colle pour la connexion de fibres optiques comme par exemple la fluidité de la colle, son comportement au polissage et son temps de durcissement.

Une autre méthode actuellement utilisée pour connecter des fibres optiques en matière plastique consiste à fixer les embouts de centrage sur leur gaine mécanique, soit par serrage d'une pièce métallique liée au manchon, soit à l'aide d'une gaine thermorétractable.

Cette méthode de connexion pose un certain nombre de problèmes liés principalement au fait que l'extrémité des fibres à connecter est montée libre dans l'embout de centrage. En effet, les fibres doivent pouvoir être introduites dans les embouts; elles sont montées avec jeu dans le manchon de centrage; donc ces fibres risquent de se décentrer et même de se retirer du connecteur dans lequel elles sont montées, et notamment lors d'une courbure de ces fibres.

Les deux méthodes de connexion décrites précédemment (collage et serrage) sont souvent utilisées conjointement. Elles présentent, en plus de leurs inconvénients spécifiques, des inconvénients communs. En particulier, comme vu plus haut, l'extrémité des fibres optiques à connecter doit pouvoir se monter libre, c'est-à-dire avec un certain jeu, dans le manchon de centrage; or, du fait des tolérances de diamètre des fibres optiques, ce jeu peut être relativement important entraînant des difficultés pour placer deux fibres optiques rigoureusement en face l'une de l'autre ainsi qu'une non reproductibilité des pertes de lumière au niveau des connexions.

La présente invention a justement pour objet un procédé de connexion de fibres optiques permettant de remédier aux différents inconvénients décrits précédemment, ainsi que les dispositifs obtenus selon ce procédé.

De façon plus précise, l'invention a pour objet un procédé de connexion de fibres optiques, caractérisé en ce que l'on utilise certaines fibres optiques en matière plastique, obtenues par étirage, on introduit l'une des extrémités de ces fibres dans des évidements pratiqués à cet effet dans des pièces mécaniques de connexion, on élève la température de ces extrémités à une température inférieure à la température d'étirage des fibres afin d'accroître leur diamètre jusqu'à ce qu'elles remplissent lesdits évidements et épousent la surface interne de ces évidements.

Le procédé de l'invention est basé sur l'une des propriétés physiques de certaines fibres optiques en matière plastique obtenues par étirage d'une préforme. En effet, lors de l'étirage de ces fibres, leur structure moléculaire, au cours du refroidissement, se fige dans une structure étirée; or, par un chauffage à température suffisante de ces fibres, leur structure moléculaire a tendance à reprendre sa forme première (c'est-à-dire avant étirage) entraînant ainsi un gonflement de ces fibres, s'accompagnant d'un raccourcissement de celles-ci.

Les fibres optiques sont, par exemple, des fibres comportant une gaine optique en acétate de polyvinyle et un coeur en polystyrène obtenues par étirage à une température de, par exemple 190°C.

Selon un mode de mise en oeuvre du procédé de l'invention, on introduit à l'une des extrémités d'un évidement, l'extrémité d'au moins une première fibre et à l'autre extrémité dudit évidement l'extrémité d'au moins une deuxième fibre devant être connectée à la première: les pièces mécaniques de connexion évidées constituent le connecteur.

Ce procédé permet de placer les extrémités de deux fibres optiques plastiques à connecter rigoureusement en face l'une de l'autre et ce, quel que soit le diamètre de ces fibres avant leur connexion. Il est, de plus, aisé à mettre en oeuvre.

De préférence, les extrémités des fibres à connecter sont dépourvues de leur gaine mécanique protectrice.

Selon un autre mode de mise en oeuvre du procédé de l'invention, on introduit simultanément l'extrémité de plusieurs fibres optiques juxtaposées dans un même évidement. Ceci permet de réaliser une connexion de conduits de lumière multipoints.

La pièce mécanique de connexion peut notamment être un embout conique.

L'introduction à l'extrémité rétrécie d'un tel embout de l'extrémité d'une première fibre optique et à l'extrémité évasée dudit embout de l'extrémité de plusieurs fibres juxtaposées devant être connectées à la première fibre permet de réaliser un dispositif de connexion servant au multiplexage de signaux optiques. En effet, il est ainsi possible d'introduire dans une même fibre optique plastique les signaux optiques issus de plusieurs fibres optiques et, inversement, de distribuer un même signal à plusieurs fibres.

Selon le mode de réalisation principal de l'invention, les pièces mécaniques de connexion sont des embouts de centrage disposés sur chacune des extrémités des fibres à connecter et qui viennent, de manière classique, se placer dans les connecteurs. La disparition du jeu entre fibre et embout de centrage et l'absence de colle permettent de pallier aux inconvénients de l'art antérieur.

D'autres caractéristiques et avantages de l'invention ressortiront mieux de la description qui va suivre, donnée à titre illustratif et non limitatif en référence aux figures annexées dans lesquelles:

—la figure 1 représente schématiquement, en coupe lontitudinale, un connecteur servant à multiplexer des signaux optiques, obtenu selon le procédé de l'invention,

—la figure 2 représente schématiquement une vue en coupe selon le plan II—II du connecteur de la figure 1,

—la figure 3 représente schématiquement, en coupe longitudinale, un connecteur mâle-femelle pour une connexion fibre à fibre obtenu selon le procédé de l'invention,

—la figure 4 représente schématiquement en coupe longitudinale une connexion de type épissurage, réalisée selon le procédé de l'invention, et

—la figure 5 représente schématiquement en perspective, un connecteur multifibres, obtenu selon le procédé de l'invention.

Selon l'invention, on utilise des fibres optiques en matière plastique obtenues par étirage d'une préforme. Comme fibres optiques on peut utiliser, par exemple, celles décrites dans la demande de brevet français No. 82 16026 déposée le 23 Septembre 1982 au nom de demandeur. Ces fibres optiques généralement munies d'une gaine mécanique de protection sont tout d'abord dénudées de cette gaine à leurs extrémités devant être connectées. Ces extrémités dénudées sont ensuite introduites dans des évidements, pratiqués à cet effet, dans des pièces mécaniques de connexion constituées en particulier par des embouts (ou bagues) de centrage pouvant être montés de façon connue dans des connecteurs.

Pour tenir compte du raccourcissement des extrémités des fibres optiques, lors de leur chauffage, il est préférable, mais non nécessaire, que les extrémités des fibres optiques dépassent des embouts correspondants.

Les extrémités des fibres optiques introduites dans ces embouts de centrage sont ensuite chauffées de façon homogène afin d'augmenter leur diamètre jusqu'à ce qu'elles occupent tout le volume qui leur est offert, c'est-à-dire tout l'intérieur des embouts, et épousent la surface interne de ces embouts. Ce chauffage, provoquant un ramollissement de l'extrémité des fibres optiques à connecter, est suffisant pour solidariser lesdites extrémités dans les embouts de centrage. Pratiquement, l'élévation en température des extrémités dénudées des fibres optiques plastiques peut se faire à l'aide d'un appareil connu (four par exemple) en chauffant directement les embouts de centrage ou bien le connecteur dans lequel sont montés lesdits embouts. Ensuite, on peut laisser les fibres optiques se rafroidir jusqu'à la température ambiante puis, si nécessaire, couper, la partie de fibres optiques faisant saillie hors des embouts.

Ce procédé de connexion présente l'avantage d'être relativement rapide. Par ailleurs, il permet d'obtenir des fibres optiques parfaitement centrées dans leur montage mécanique, et notamment dans l'embout de centrage. Il permet de plus d'éviter l'emploi de colle et donc tous les problèmes de compatibilité de matériaux, comme dans les procédés de l'art antérieur. Pair ailleurs, il peut être utilisé avec tout type d'embouts de centrage et ce quel que soit le matériau qui les constitue à condition, toutefois, que ceux-ci comportent un état de surface interne de bonne qualité.

Le procédé de l'invention permet aussi de connecter deux fibres optiques entre elles disposées dans un même embout de centrage. Pour cela, après avoir dénudé l'extrémité des fibres à connecter de leur gaine mécanique, on introduit à l'une des extrémités de l'embout, l'extrémité d'une première fibre optique plastique et à l'autre extrémité de ce même embout l'extrémité de la deuxième fibre optique, puis ou chauffe l'ensemble (embout+fibres) jusqu'à remplissage, par les extrémités dénudées de ces fibres, de tout l'intérieur de l'embout et enfin on laisse refroidir jusqu'à l'ambiant. Ceci permet d'obtenir une connexion fibre à fibre.

Le procédé de l'invention peut aussi être utilisé pour connecter deux ensembles ou faisceaux de fibres optiques plastiques. Pour cela il suffit simplement d'introduire simultanément l'extrémité dénudée de la gaine mécanique d'un premier ensemble de fibres optiques justaposées à l'une des extrémités d'un embout de centrage et d'introduire à l'autre extrémité de ce même embout, l'extrémité dénudée de la gaine mécanique du deuxième ensemble de fibres optiques juxtaposées. Ceci permet de réaliser une connexion de conduits de lumière multipoints servant au transport d'images, chaque couple de fibres connectées transportant un point élémentaire desdites images.

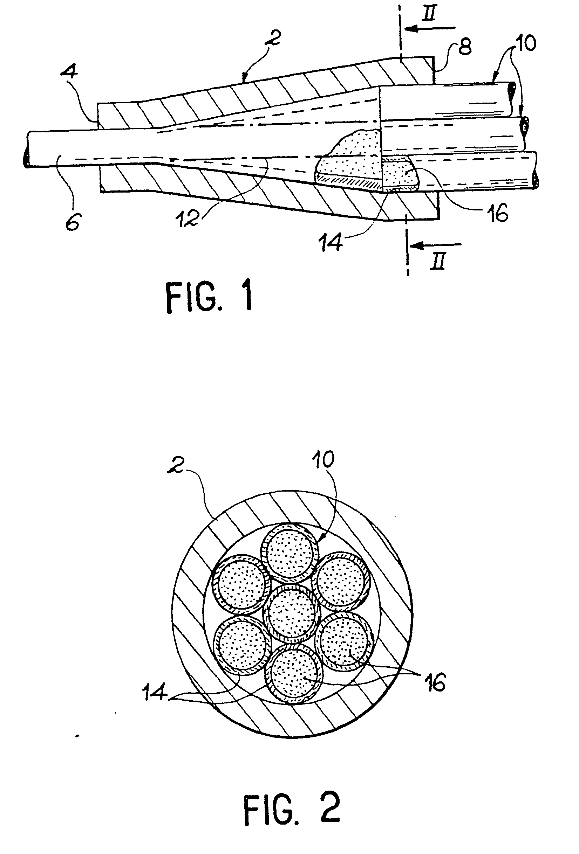

Etant donné que l'élévation en température de certaines fibres optiques en matière plastique obtenues par étirage peut entraîner une dilatation ou un gonflement du diamètre de ces fibres relativement important, il est possible de réaliser, selon l'invention, des connecteurs permettant le multiplexage de signaux optiques. Un tel connecteur est représenté sur les figures 1 et 2.

Pour réaliser ce connecteur, on utilise un embout de centrage 2, notamment métallique, présentant une forme conique (figure 1). A l'extrémité rétrécie 4 de cet embout 2, on introduit l'extrémité dénudée de la gaine mécanique d'une première fibre optique plastique 6 et, à l'extrémité évasée 8 de ce même embout, l'extrémité dénudée de la gaine mécanique de plusieurs fibres optiques plastiques juxtaposées 10 afin de les connecter à la première fibre 6. Ensuite, on chauffe l'ensemble (embout+fibres) jusqu'à ce que le volume interne de l'embout 2 soit occupé par les extrémités dénudées de ces fibres optiques. Sur la figure 1, le dimensionnement de la fibre optique 6 dans l'embout 2, avant l'étape de chauffage, est schématisé par les traits mixtes portant la référence 12.

Le connecteur multiplexeur ainsi réalisé permet d'introduire dans une même fibre optique 6 des signaux optiques issu des différentes fibres optiques 10 et inversement de distribuer un même signal transmis par la fibre optique 6, aux différentes fibres 10.

Ce connecteur peut par exemple être réalisé avec des fibres optiques comportant une gaine optique 14 en acétate de polyvinyle et un coeur 16 en polystyrène, obtenues par étirage à une température de 190°C, voir demande de brevet citée ci-dessus, et un embout en métal, en chauffant de façon homogène l'ensemble à une température de l'ordre de 140°C. Le chauffage de ces fibres plastiques entraîne une dilatation de leur diamètre d'un facteur 3, ce qui permet ainsi de connecter une même fibre optique 6 à sept autres fibres optiques 10 de même diamètre que la fibre 6, comme représenté sur la figure 2. Les fibres 10 présentent par exemple un diamètre de l'ordre du micromètre.

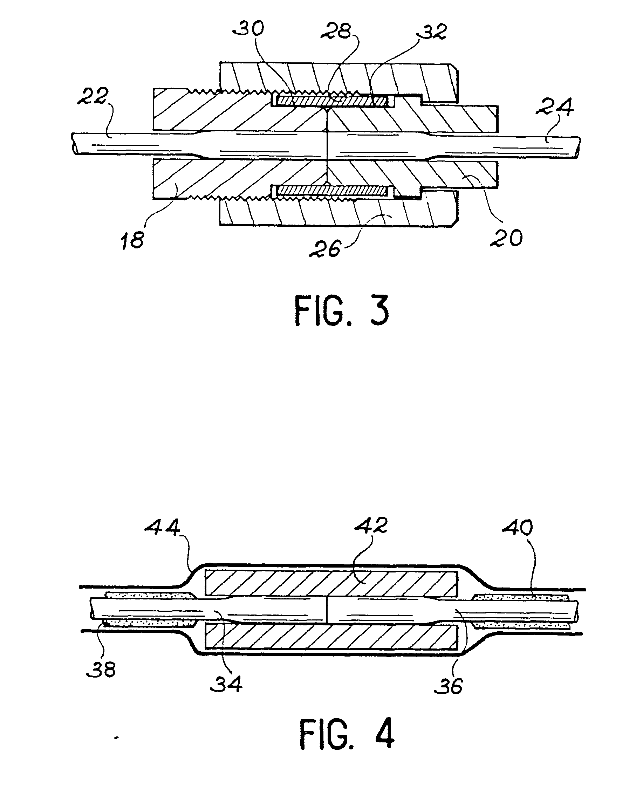

Sur la figure 3, on a représenté un connecteur mâle-femelle pour une connexion fibre à fibre. Le connecteur comprend deux embouts de centrage 18 et 20 dans lesquels ont été respectivement montées, selon le procédé de l'invention, l'une des extrémités dénudées d'une première fibre optique plastique 22 et d'une deuxième fibre optique plastique 24. Ces deux embouts 18 et 20 sont montés et fixés de façon classique dans un connecteur 26. Etant donné que les fibres optiques 22 et 24 sont parfaitement centrées dans leurs embouts respectifs 18 et 20, dont elles occupent tout le volume interne, l'alignement des extrémités des fibres optiques 22 et 24 à connecter ne dépend que du centrage des embouts 18 et 20 dans le connecteur 26. Ce centrage peut par exemple être assuré au moyen d'une bague de centrage 26 dans laquelle est emmanchée l'une des extrémités des manchons 18 et 20 comportant respectivement à cet effet une partie 30 et 32 de diamètre plus faible.

Pour obtenir des extrémités de fibres optiques 22 et 24 au contact l'une de l'autre, comme représenté sur la figure 3, il est nécessaire de monter dans les embouts les extrémités des fibres optiques de manière à ce qu'elles dépassent desdits embouts, avant de les chauffer.

Sur la figure 4, on a représenté une connexion de type épissurage correspondant à la connexion de deux fibres optiques plastiques entre elles. Dans ce type de connexion, les extrémités des fibres 34 et 36, à connecter, dépourvues respectivement de leur gaine mécanique 38 et 40, sont montées dans un même embout 42, notamment de forme cylindrique, selon le procédé de l'invention.

Si l'on désire que les extrémités des fibres optiques 34 et 36 soient au contact l'une de l'autre, comme représenté sur la figure 4, il est nécessaire de les maintenir appliquées l'une contre l'autre lors de l'étape de chauffage, compte tenu du phénomène de raccourcissement des fibres.

Le type de connexion de la figure 4 étant définitif, l'ensemble (embout+fibres) peut notamment être monté dans une gaine 44 thermorétractable.

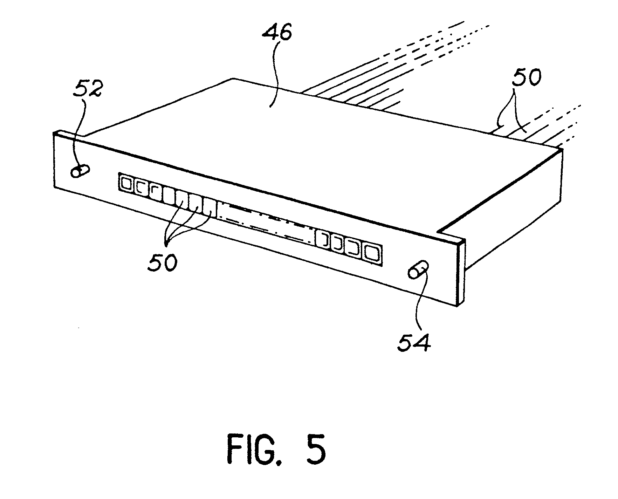

Sur la figure 5, on a représenté un connecteur multifibres. Ce connecteur comprend une pièce mécanique 46 de forme parallélépipédique comportant un évidement 48 aussi de forme parallélépipédique dans lequel sont disposées les extrémités dénudées de plusieurs fibres optiques plastique 50. Ces fibres optiques 50 sont adjacentes et situées dans un même plan, elles définissent une nappe de fibres optiques.

L'extrémité de ces fibres optiques 50 montées dans la pièce mécanique 46 selon le procédé de l'invention, présente sensiblement une section carrée venant du fait que, lors de l'étape de chauffage des extrémités de ces fibres, celles-ci gonflent jusqu'à remplir tout le volume qui leur est offert et en particulier les vides optiques présents au départ entre les fibres optiques de forme ronde.

L'utilisation de deux connecteurs, tels que décrits ci-dessus, permet de connecter deux nappes de fibres optiques en coïncidence fibre à fibre, la coïncidence pouvant par exemple être assurée au moyen de deux pions de centrage 53 et 54, situés sur les faces des pièces mécaniques 46 à mettre en regard.

Les différents dispositifs de connexion décrits précédemment ne sont bien entendu donné qu'à titre illustratif, tout autre dispositif de connexion de fibres optiques pouvant être envisagé sans pour autant sortir du cadre de l'invention.

## Revendications

1. Procédé de connexion de fibres optiques, caractérisé en ce que l'on utilise des fibres optiques en matière plastique (6, 10), obtenues par étirage, on introduit l'une des extrémités de ces fibres (6, 10) dans des évidements pratiqués à cet effet dans des pièces mécaniques de connexion (2), on élève la température de ces extrémités à une température inférieure à la température d'étirage des fibres afin d'accroître leur diamètre jusqu'à ce qu'elles remplissent lesdits évidements et épousent la surface interne de ces évidements.

2. Procédé selon la revendication 1, caractérisé en ce que ladite extrémité des fibres (6, 10) est dépourvue de gaine mécanique.

3. Procédé selon l'une quelconque des revendications 1 et 2, caractérisé en ce que l'on introduit à l'une des extrémités d'un évidement, ladite extrémité d'au moins une première fibre (6) et à l'autre extrémité dudit évidement ladite extrémité d'au moins une deuxième fibre (10) devant être connectée à la première.

4. Procédé selon l'une quelconque des revendications 1 à 3, caractérisé en ce que l'on introduit simultanément ladite extrémité de plusieurs fibres optiques juxtaposées (10) dans un même évidement.

5. Procédé selon l'une quelconque des revendications 1 à 4, caractérisé en ce que chaque pièce mécanique est un embout de centrage (2) servant au montage des fibres (6, 10) dans un connecteur.

6. Procédé selon la revendication 4, caractérisé en ce que l'embout (2) présentant une forme conique, on introduit à l'extrémité rétrécie (4) de ce manchon ladite extrémité d'une première fibre optique (6) et à l'extrémité évasée (8) de ce même embout ladite extrémité de plusieurs fibres juxtaposées (10) devant être connectées à la première fibre (6).

7. Procédé selon la revendication 6, caractérisé en ce que le nombre des fibres (10) connectées à ladite première fibre (6) est égal à sept, lorsque ces fibres présentent le même diamètre que ladite première fibre.

8. Procédé selon l'une quelconque des revendications 1 à 7, caractérisé en ce que les fibres (6, 10) comportent une gaine optique (14) en acétate de polyvinyle et un coeur (16) en polystyrène.

9. Procédé selon la revendication 4, caractérisé en ce que les fibres optiques sont disposées dans un même plan.

10. Dispositifs de connexion obtenus selon le procédé conforme à l'une quelconque des revendications 1 à 9.

## Patentansprüche

1. Verfahren zum Verbinden von optischen Fasern, dadurch gekennzeichnet, daß man optische Fasern aus Plastik (6, 10), di man durch Ziehen erhält, verwendet, man eines der Enden dieser Fasern (6, 10) in Aussparungen einführt, die zu diesem Zweck in mechanische Verbindungsstücke (2) gearbeitet wurden, man die Temperatur dieser Enden bis zu einer Temperatur unterhalb die Ziehtemperatur der Fasern erhöht, um ihren Durchmesser zu vergrößern, bis sie diese Aussparungen ausfüllen und sich mit der inneren Oberfläche dieser Aussparungen verbinden.

2. Verfahren nach Anspruch 1, dadurch gekennzeichnet, daß das äußere Ende der Fasern (6, 10) nicht mit einer mechanischen Scheide umgeben ist.

3. Verfahren nach einem der Ansprüche 1 und 2, dadurch gekennzeichnet, daß man in eines der Enden einer Aussparung das Ende wenigstens einer ersten Faser (6) und in das andere Ende der Aussparung das Ende wenigstens einer zweiten Faser (10) einführt, die mit der ersten verbunden werden soll.

4. Verfahren nach einem der Ansprüche 1 bis 3, dadurch gekennzeichnet, daß man gleichzeitig das Ende mehrerer nebeneinanderliegender optischer Fasern (10) in dieselbe Aussparung einführt.

5. Verfahren nach einem der Ansprüche 1 bis 4, dadurch gekennzeichnet, daß sich in jedem mechanischen Stück ein Zentrierring (2) befindet, der zur Montage der Fasern (6, 10) in einem Leiter dient.

6. Verfahren nach Anspruch 4, dadurch gekennzeichnet, daß der Ring (2) eine konische Form aufweist, man in das zusammengezogene Ende (4) dieser Hülse das Ende einer ersten optischen Faser (6) und in das erweiterte Ende (8) dieses Ring das Ende von mehreren, nebeneinanderliegenden optischen Fasern (10) einführt, die mit der ersten Faser (6) verbunden werden sollen.

7. Verfahren nach Anspruch 6, dadurch gekennzeichnet, daß die Zahl der mit der ersten Faser (6) verbundenen Faser (10) gleich sieben ist, wenn diese Fasern den gleichen Durchmesser aufweisen wie die erste Faser.

8. Verfahren nach einem der Ansprüche 1 bis 7, dadurch gekennzeichnet, daß die Fasern (10) eine optische Scheide (14) aus Polyvinylazetat und einen Kern (16) aus Polystyren aufweisen.

9. Verfahren nach Anspruch 4, dadurch gekennzeichnet, daß die optischen Fasern in einer gleichen Ebene angeordnet sind.

10. Verbindungsvorrichtung, die nach dem Verfahren entsprechend einem der Ansprüche 5 bis 10 erhalten wird.

## Claims

1. Process for the connection of optical fibres, characterized in that use is made of certain plastics materials optical fibres (6, 10) obtained by drawing, one of the ends of said fibres (6, 10) is introduced into recesses provided for this purpose in mechanical connecting parts (2), the temperature of said ends is raised to a temperature below the drawing temperature of the fibres in order to increase their diameter until they fill said recesses and adapt to the shape of the internal surface of said recesses.

2. Process according to claim 1, characterized in that the end of the fibres (6, 10) is freed from its mechanical covering.

3. Process according to either of the claims 1 and 2, characterized in that the end of at least one first fibre (6) is introduced at one of the ends of a recess and the end of at least one second fibre (10) to be connected to the first fibre is introduced at the other end of said recess.

4. Process according to any one of the claims 1 to 3, characterized in that said end of several juxtaposed optical fibres (10) is simultaneously introduced into the same recess.

5. Process according to any one of the claims 1 to 4, characterized in that each mechanical part is a centring termination (2) used for the fitting of the fibres (6, 10) in a connector.

6. Process according to claim 4, characterized in that, as the termination (2) has a conical shape, the end of a first optical fibre (6) is introduced at the narrowed end (4) of said termination, whilst the end of several juxtaposed fibres (10) to be connected to the first fibre (6) is introduced at the widened end (8) of the same termination.

7. Process according to claim 6, characterized in that the number of fibres (10) connected to said first fibre (6) is equal to 7, when said fibres have the same diameter as the first fibre.

8. Process according to any one of the claims 1 to 7, characterized in that the fibres (6, 10) have a polyvinyl acetate optical sheath (14) and a polystyrene core (16).

9. Process according to claim 4, characterized in that the optical fibres are arranged in the same plane.

10. Connecting devices obtained according to the process according to any one of the claims 1 to 9.

EP 0 165 841 B1

FIG. 1

FIG. 2

1

30  28  32

22                    24

18        26        20

# FIG. 3

44        42        40

38    34        36

# FIG. 4

FIG. 5